Europäisches Patentamt

European Patent Office

Office européen des brevets

(11) Veröffentlichungsnummer: **0 195 923**
**B1**

(12) **EUROPÄISCHE PATENTSCHRIFT**

(45) Veröffentlichungstag der Patentschrift: 25.07.90

(51) Int. Cl.⁵: **B 60 R 13/08**

(21) Anmeldenummer: **86101990.9**

(22) Anmeldetag: **17.02.86**

(54) Adhäsives Isolationssystem.

(30) Priorität: 26.03.85 DE 3510932

(43) Veröffentlichungstag der Anmeldung:
01.10.86 Patentblatt 86/40

(45) Bekanntmachung des Hinweises auf die
Patenterteilung:
25.07.90 Patentblatt 90/30

(84) Benannte Vertragsstaaten:
BE DE FR GB IT

(56) Entgegenhaltungen:
DE-A-2 162 984
FR-A-1 481 403
US-A-3 960 793
US-A-4 463 049

CHEMICAL ABSTRACTS, Band 71, 1969, Spalte
40374, Zusammenfassungsnr. 40376z,
Columbus, Ohio, US; I.V. STRIZHEVSKII et al.:
"Bituminous atactic mastic", & SU - A - 23 8060
(PAMFILOV) 20.02.1968

(73) Patentinhaber: **Dr. Alois Stankiewicz GmbH**
**D-3101 Adelheidsdorf (DE)**

(72) Erfinder: **Gahlau, Heinemann, Dipl.-Ing.**
**Siedlungsweg 1**
**D-3100 Celle (DE)**
Erfinder: **Hoffmann, Manfred, Dipl.-Ing.**
**Im Stroth 5**
**D-3101 Nienhof (DE)**
Erfinder: **Kittel, Christoph**
**Kiefernweg 9**
**D-3101 Nienhagen (DE)**

(74) Vertreter: **Melzer, Wolfgang, Dipl.-Ing. et al**
**Patentanwälte Dipl.-Ing. H. Mitscherlich Dipl.-**
**Ing. K. Gunschmann Dipl.-Ing. Dr.rer.nat. W.**
**Körber Dipl.-Ing. J. Schmidt-Evers Dipl.-Ing. W.**
**Melzer Steinsdorfstrasse 10**
**D-8000 München 22 (DE)**

Courier Press, Leamington Spa, England.

# EP 0 195 923 B1

**Beschreibung**

Die Erfindung betrifft einen Formteil, der ein geformtes Isolationssystem zur Schallisolation von Trennwänden in Kraftfahrzeugen bildet, gemäß dem Oberbegriff des Anspruchs 1. Ein solcher Formteil ist schon aus dem Dokument US—A—4 463 049 bekannt.

Zur Schallisolation von Trennwänden zwischen einem Raum, in dem Lärm erzeugt wird, und einem zu schützenden Raum, insbesondere in Kraftfahrzeugen zwischen Motorraum und Fahrgastraum, sind verschiedene Materialien und Systeme entwickelt worden, die heute serienmäßig eingesetzt werden. Solche Materialien und Systeme wirken auf verschiedene Weise, z.B. luftschalldämmend, luftschallabsorbierend und körperschalldämpfend, aber auch in Verknüpfung dieser Eigenschaften in ein und demselben Material oder System. Im Regelfall müssen diese Produkte zur vollständigen Nutzung der akustisch wirksamen Eigenschaften vollflächig durch Verklebung mit dem Untergrund, hier also der Trennwand, verbunden werden. Insbesondere bei großflächigen Stirnwandisolationen von Kraftfahrzeugen ist eine solche Verklebung aus montagetechnischen Gründen nicht möglich bzw. überhaupt unerwünscht, weil die Teile, z.B. aus Reparaturgründen wieder unzerstört entfernbar sein müssen. Das hat zur Folge, daß an der lärmtechnisch exponierten Stirnwand als Trennwand zwischen Motorraum und Fahrgastraum bei Einbringung der heute bevorzugten Masse-Feder-Systeme, bestehend aus Schaum bzw. Vlies und speziellen, z.B. biegeweichen Oberflächenabdeckungen, die in den Materialien bzw. Systemen vorhandenen akustischen Eigenschaften, insbesondere der Körperschalldämpfung, niemals vollständig und effektiv genutzt werden können. Dies führt u.a. dazu, daß neben den Systemen, die zur Luftschalldämmung der Stirnwand von Kraftfahrzeugen verwendet werden, noch zusätzlich körperschalldämpfende Beläge in separaten Arbeitsgängen appliziert werden müssen.

In der Literatur (vgl. etwa DE—OS—15 94 052) sind Verfahren bekannt, bei denen die Applikation schallisolierender Teile durch Nutzung magnetischer Haftkräfte vereinfacht wird. Dies beschränkt sich jedoch auf Folien bzw. auf verformte Teile, die heißschmelzklebend ausgerüstet werden können und während des Einschmelzvorganges durch die magnetischen Haftkräfte in der gewünschten Positionierung gehalten werden. Zur Herbeiführung der Körperschalldämpfung sind diese Haftkräfte dann entbehrlich, weil die Dämpfung durch die feste Verbindung zwischen Trennwand und Folie, verursacht durch den Heizschmelzkleber, bewirkt wird.

Zur Schallisolation von Stirnwänden werden häufig verformte, konturschlüssig anliegende Formteile in der Ausführung als Masse-Feder-System verwendet. In diese könnten zwar ebenfalls verformte, mit magnetisierbaren Füllstoffen versehene Folien nach bekannten Verfahren eingelegt und z.B. umschäumt werden, jedoch würden die üblicherweise aufgebrachten schwachen magnetischen Kräfte keine ausreichend große akustisch wirksame Kopplung zum Untergrund bewirken. Dies beruht darauf, daß die Magnetkräfte im wesentlichen immer in Richtung der Flächennormalen wirken und daher keine ausreichend großen Tangentialkräfte übertragen werden können, die zur Herbeiführung körperschalldämpfender Effekte erforderlich sind.

Aufgabe der Erfindung ist es daher, unter Nutzung adhäsiv wirkender Beschichtungen solcher Formteile Isolationssysteme bereitzustellen, die einerseits eine einfache und sichere Montage durch Verschieben in die gewünschte Position ermöglichen, andererseits bei Andruck durch den Adhäsionseffekt eine dermaßen kraftschlüssige Verbindung zur Trennwand bewirken, daß die in den nachgeschalteten Isolationsschichten enthaltenen akustischen Eingenschaften, insbesondere der Körperschalldämpfung, voll zur Wirkung kommen. Außerdem soll nach erfolgter Positionierung die Adhäsionskraft so groß werden, daß sie praktisch einer Verklebung gleichkommt, die Systeme jedoch ggf. für Reparaturzwecke wieder unzerstört entfernt werden können.

Zur Lösung dieser Aufgabe wird ein gattungsgemäßer Formenteil vorgeschlagen, der die Merkmale des Kennzeichnungsteils des Anspruchs 1 aufweist. Zwar ist ein unterVernetztes Material aus dem Gebrauchsmuster G—U—82 01 510 bzw. US—A—4 463 049 bekannt, jedoch ist die Vernetzung dort so gesteuert, daß ein örtlich unterschiedlicher Vernetzungsgrad über der Fläche und somit örtlich unterschiedliche akustische Eigenschaften vorliegen. Außerdem können die dort beschriebenen akustischen Eigenschaften nur durch größere Schichtdicken erhalten werden.

Liegt dagegen die starke Untervernetzung gleichmäßig über die gesamte Oberfläche der Beschichtung verteilt vor, so entsteht eine Materialschicht, die in Verbindung mit nachgeschalteten Isolationsschichten bei geringer Schichtdicke die geforderte adhäsive Verbindung zwischen dem Isolationssystem und dem Untergrund bewirkt und somit die dämpfenden Eigenschaften akustischer Federn, insbesondere von viscoelastischen Schäumen, aber auch von Vliesen voll zur Geltung bringt. Hierzu genügen Schichtdicken von <1 mm. Das adhäsiv wirkende Material braucht hierzu keine nennenswerte Eigendämpfung zu besitzen.

Ein weiterer Vorteil des adhäsiven Materials besteht darin, daß es in größeren Schichtdicken in Verbindung mit biegesteifen Abdeckungen eine zusätzliche Komponente zur Körperschalldämpfung liefert, da es dann in Art eines Sandwichsystems wirkt. Als Abdeckungen eignen sich preiswerte Materialien wie Pappe oder Kraftpapier, die zweckmäßig mit Lochungen versehen werden, um die gewünschte Haftung zwischen dem adhäsiv wirkenden Material, der biegesteifen Abdeckung und den darauf folgenden Schichten aus Schaum bzw. Vlies oder anderen akustisch wirksamen Schichten zu ermöglichen. Die Abdeckungen können auch aus spritzbaren, aushärtenden Kunststoffen bestehen.

In Bereichen der Stirnwandisolation, in denen aus Platzgründen nicht die akustisch wirksame Feder verwendet werden kann, wirkt das adhäsive Beschichtungsmaterial auch alleine, sofern einige Millimeter an Schichtdicke zugelassen werden. Versteifende Abdeckungen sind in Form von Sperrschichten bzw. Schwerschichten und Teppich ohnehin immer vorhanden.

Die Nutzung der Adhäsionskräfte des Beschichtungsmaterials kann auch örtlich verteilt vorgenommen werden, z.B. an Stellen, an denen mit Hilfe von einschlägigen und bekannten Untersuchungsverfahren Schallstrahler ermittelt wurden. Der Dämpfungseffekt des adhäsiven Isolationssystems ist so groß, daß sonst zusätzlich einzubringende körperschalldämpfende Beläge ganz oder teilweise entbehrlich werden. Im Sinne einer wirtschaftlichen Gesamtrechnung wird durch den Einsatz von adhäsiven Isolationssystemen eine Verbilligung der Schallisolierung erreicht, ohne daß die akustische Gesamtwirkung bzw. der Geräuschkomfort in einem Fahrzeug verschlechtert wird.

Das adhäsive Beschichtungsmaterial läßt sich in den Herstellungsprozeß von verformten Teilen aus hinterschäumten Schwerschichten in einfacher Weise dadurch einbringen, daß z.B. die zur Herstellung solcher Teile erforderlichen Formen tiefziehfähig ausgerüstet werden. Zunächst wird dann eine dünne Schutzfolie tiefgezogen, auf die das adhäsive Beschichtungsmaterial ganz oder teilflächig aufgespritzt wird. Anschließend folgt dann der weitere übliche Herstellungsprozeß. Außerdem kann das adhäsive Beschichtungsmaterial vorgefertigt und in bekannter Weise an vorbezeichneten Stellen der Form umschäumt werden.

Als adhäsives Isolationsmaterial können schäumende und nichtschäumende sowie gefüllte und ungefüllte Mischungen genommen werden. Als Füllstoffe eignen sich z.B. Schwerspat, Kreide, Schiefermehl, Ruß und Graphit.

Die nachfolgenden Beispiele dienen der Erläuterung von Abmischungen für das adhäsive Beschichtungsmaterial, ohne die Erfindung darauf zu beschränken.

Insbesondere kann der der Erfindung ganz allgemein zugrunde liegende Gedanke eines adhäsiven, zerstörungsfrei entfernbaren Isolationssystems zur Schallisolation von Trennwänden, insbesondere von Kraftfahrzeugen, beispielsweise auch dadurch realisiert werden, daß eine geeignete Bitumenabmischung verwendet wird. Aus der einschlägigen Literatur bzw. dem verfügbaren Prospektmaterial (vgl. z.B. "Tabellen und Übersichten zur Anwendung von Shell-Bitumen", Deutsche Shell AG, 1986) kann entnommen werden, daß Bitumen als Klebemasse für Schall- und Wärmedämmstoffe empfohlen wird. Bei der Erfindung sollen jedoch gerade keine Klebemassen verwendet werden, sondern vielmehr adhäsive Beschichtungen. Deshalb wäre eine Materialabmischung erforderlich, die diesem Anspruch vor allem auch unter Berücksichtigung der Kältefestigkeit (Kälteflexibilität) gerecht wird. Würde z.B. der Wert für die Kältefestigkeit zu hoch liegen, könnte bei Verwendung eines solchen Systems in Fahrzeug der gewünschte dämpfende Effekt nicht erreicht werden, da sich dann die adhäsive Beschichtung bei niederen Außentemperaturen, z.B. unterhalb des Gefrierpunktes, vom Blech lösen würde und die für den erfindungsgemäßen Effekt erforderliche kraftschlüssige adhäsive Verbindung nicht mehr gegeben wäre. Bei einer Bitumenabmischung gemäß der Erfindung wird dieses Problem, nämlich die Verbesserung der Kälteflexibilität, durch Zumischung von ataktischem Polypropylen (APP) erreicht. Die Kälteflexibilität kann durch den Brechpunkt nach Fraaß gekennzeichnet werden, der aus den einschlägigen Tabellenwerken zu entnehmen ist.

Als gängige Bitumensorten sind in übergeordneten Begriffen das sog. Destillierbitumen und das Oxidationsbitumen bekannt, wobei das letztere auch als "geblasenes" Bitumen bezeichnet wird und durch den im allgemeinen niedrigliegenden Brechpunkt günstigere Eigenschaften bei der Verwendung als adhäsive Beschichtung aufweist als z.B. Destillierbitumen. Die Adhäsionsfähigkeit kann z.B. mit Hilfe des Kennwertes "Penetration" beschrieben werden, bei dem gemäß DIN 1995 die Eindringtiefe einer Nadel bei einer definierten Kraft und 10 sec. Einwirkdauer auf den Bitumen-Prüfkörper ermittelt wird. Penetrationswerte <15 kennzeichnen harte Bitumensorten, Werte >80 dagegen sehr weiche Sorten. Als für den vorgesehenen Zweck günstig haben sich Penetrationswerte im Bereich zwischen etwa 15 bis 40 erwiesen. Wegen der häufig starken räumlichen Verformung der Oberfläche der Schallisolationsteile, für die eine adhäsive Beschichtung vorgesehen ist, bietet sich eine Verarbeitung der APP-Bitumenmischung mit Hilfe einer Spritzanlage an. Dazu wiederum ist das Mischungsverhältnis APP zu Bitumen zu ermitteln, das sowohl günstige Verarbeitungseigenschaften bewirkt als auch die erfindungsgemäße adhäsive Wirkung entfaltet. Die erforderliche Spritzanlage muß auf ca. 220°C beheizbar sein, damit das dann verflüssigte Material über Sprühdruck fein zerteilt auf die zu beschichtende Oberfläche aufgebracht werden kann.

Mischungsverhältnisse APP zu Bitumen von 1:1 bis ca. 1:2 haben sich als mit einer solchen Spritzanlage nicht verarbeitbar erwiesen. Ebenso erwies sich die Mischung APP zu Bitumen von ca. 1:4 als sehr klebrig, so daß die Aufgabe nicht gelöst werden konnte. Geeignet erwies sich dagegen eine Abmischung von APP zu Bitumen im Verhältnis von etwa 1:3.

Geeignet ist z.B. das Oxidationsbitumen Mexphalt R 85/25 in Abmischung mit ataktischem Polypropylen Hoechst APP CR mit den kennzeichnenden Daten: Viscosität in der Schmelze bei 180°C >50.000 mPa·sec und dem Penetrationswert 35—55.

Zusätzlich werden Füllstoffe eingemischt, um das adhäsive Verhalten fein abgestuft regulieren zu können. Hierzu eignen sich die in der Fachwelt bekannten anorganischen Materialien. Außerdem sind Additive zuzufügen, wie z.B. Antioxidation, um das Verspröden der Mischung zu verhindern. Nach dem

3

Stand der Technik werden auch Verarbeitungshilfsmittel wie z.B. Wachs zugesetzt.

Beispiel 1

Komponente A:

1000 Teile Polyol, OH-Zahl ca. 36
100 Teile Diol, OH-Zahl ca. 1000
10 Teile Dibutylzinndilaurat (DBZL) als metallorgan. Katalysator
10 Teile zeolithisches Molekularsieb, z.B. "Baylith-L"-Paste
10 Teile Farbpaste

Komponente B:

Toluylendiisocyanat (TDI)-Prepolymer, NCO-Gehalt ca. 30%
Mischungsverhältnis Komp. A: Komp. B = ca. 4:1 (Gewichtsteile), nicht schäumend.

Beispiel 2

Komponente A:

1000 Teile Polyol, OH-Zahl ca. 35
100 Teile Diol, OH-Zahl ca. 1000
10 Teile Wasser
10 Teile Aminkatalysator, z.B. "Dabco R 8020" (1.4. Diazabicyclo-(2,2,2) octan, 20 %-ig in DMEA (Dimethyläthanolamin))
10 Teile Farbpaste
2000 Teile BaSO$_4$

Komponente B:

Diphenylmethandiisocyanat (MDI) NCO-Gehalt ca. 30%
Mischungsverhältnis Komp. A: Komp. B = ca. 14:1 (Gewichtsteile), schäumend.

Beisiel 3

Komponente A:

150 Teile Diol, OH-Zahl ca. 250
10 Teile Diol, OH-Zahl ca. 1000
20 Teile Polyol, OH-Zahl ca. 165
10 Teile Polyol, OH-Zahl ca. 35
50 Teile Molekularsieb, wie Beispiel 1
1 Teil Dibutylzinndilaurat
10 Teile Farbpaste
800 Teile BaSO$_4$

Komponente B:

Diphenylmethandiisocyanat NCO-Gehalt ca. 30%
Mischungsverhältnis Komp. A: Komp. B = ca. 14:1 (Gewichtsteile), nicht schäumend.

In der Zeichnung sind Ausführungsformen der Erfindung beispielschaft dargestellt. Es ziegen in schematischer Darstellung:

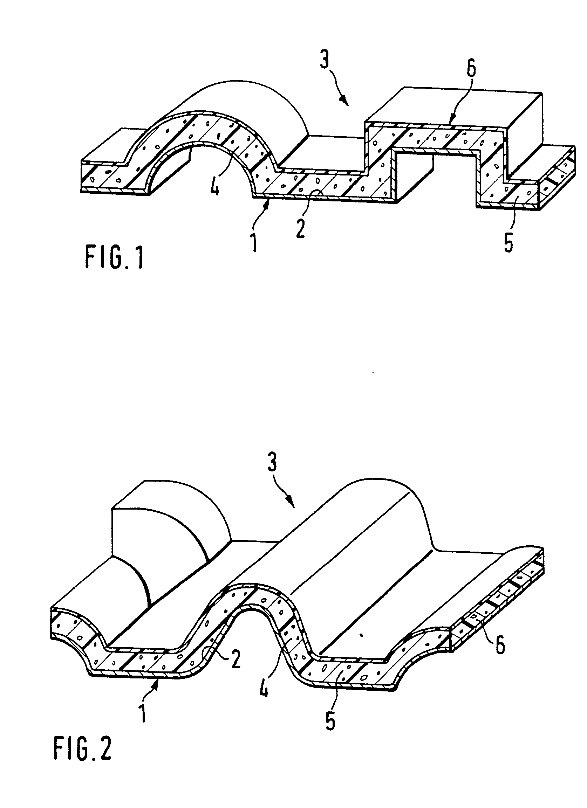

Fig. 1 und 2 jeweils in unterschiedlicher Formgebung ein auf einem durch ein profiliertes Blech gebildeten Wandteil aufgebrachtes schalldämmendes adhäsives Isolationssystem als Wandverkleidung.

Das den Wandteil 1 bildende Blech weist Profilierungen auf, denen die als Formteil ausgebildete Wandverkleidung 3 folgt, wobei stets etwa gleiche Dicke der Wandverkleidung 3 beibehalten ist. Die Wandverkleidung 3 ist auf dem Blech haftend aufgebracht, ohne einen Kleber verwenden zu müssen, und zwar mittels einer adhäsiven Beschichtung 2 oder einer entsprechend eingestellten Feder.

Die Wandverkleidung 3 besteht, wie an sich bekannt, aus einer sogenannten Feder 4, 5, aus Schaum, Vlies od. dgl. und einer eine Schwerschicht bildenden Masse 6 aus einem gefüllten Kunststoff.

Gemäß der Erfindung ist örtlich unterschiedliches Schalldämmvermögen durch teilflächig aufgebrachte adhäsive Beschichtungen 2, gegebenenfalls aber auch ganzflächig, gleichmäßiges Schalldämmvermögen durch ganzflächig aufgebrachte adhäsive Beschichtung der Feder 4, 5 erreicht.

Es zeigt sich, daß die Adhäsionskräfte des Beschichtungsmaterials der Feder 4, 5 oder der Feder selbst bei der Herstellung der Wandverkleidung 3 praktisch stufenlos geändert werden können, nämlich durch entsprechende Steuerung des Mischungsverhältnisses mit dem Vernetzungsmittel. Dabei ist bei im wesentlichen gleichbleibender Dicke und örtlich unterschiedlichem Schalldämmvermögen lediglich ein einziger einfacher Arbeitsgang erforderlich, wobei gegebenenfalls versteifende Abdeckungen zusätzlich aufzutragen sind.

# EP 0 195 923 B1

**Patentansprüche**

1. Formteil, der ein geformtes Isolationssystem (3) zur Schallisolation von Trennwänden (1) in Kraftfahrzeugen bildet, mit einer Schicht aus federndem Material (4, 5) und einer Schwerschicht (6), wobei diese Schichten (4, 5, 6) die Form und die Größe des Isolationssystems (3) festlegen und wobei zwischen einem Substrat (1) und diesem nachgeschalteten Schichten (4, 5, 6) über eine an diese Schichten (4, 5, 6) angepaßte Oberfläche eine kraftschlüssige Verbindung hergestellt ist, gekennzeichnet durch eine aus einem stark untervernetzten Polyol bestehende Beschichtung (2) auf der Oberfläche der federnden Schicht (4, 5), die gleichmäßig wenigstens über einen Teil der Oberfläche der federnden Schicht (4, 5) verteilt und permanent an der Außenseite derselben angeordnet ist, wodurch das Isolationssystem (3) an dem Substrat (1) adhäsiv anhaftet und von demselben zerstörungsfrei entfernbar ist.

2. Formteil gemäß Anspruch 1, dadurch gekennzeichnet, daß die adhäsive Beschichtung (2) weiterhin eine Abmischung aus Oxidationsbitumen und ataktischen Polypropylen (APP) enthält.

3. Formteil gemäß Anspruch 2, gekennzeichnet durch eine Abmischung mit einem Verhältnis von ataktischem Polypropylen (APP) zu Bitumen von etwa 1:3.

4. Formteil gemäß den Anprüchen 2 oder 3, gekennzeichnet durch eine Viscosität in der Schmelze bei 180°C >50.000 mPa·sec. und einem Penetrationswert nach DIN 1995 zwischen 15 und 55 vorzugsweise zwischen 35 und 55.

5. Formteil gemäß einem der Ansprüche 1 bis 4, dadurch gekennzeichnet, daß die durch die Adhäsisionskräfte gebundenen nachgeschalteten Schichten (4, 5, 6) akustisch dämpfende Eigenschaften aufweisen.

6. Formteil gemäß einem der Ansprüche 1 bis 5, dadurch gekennzeichnet, daß die adhäsive Beschichtung (2) ganzflächig ausgeführt ist.

7. Formteil gemäß einem der Ansprüche 1 bis 6, dadurch gekennzeichnet, daß die adhäsive Beschichtung (2) mit biegesteifen Abdeckungen aus Pappe, Kraftpapier, spriztbaren, aushärtenden Kunststoffen oder dergleichen versehen und zwischen der biegesteifen Abdeckung und den nachgeschalteten Schichten (4, 5, 6) angeordnet ist.

8. Formteil gemäß den Ansprüchen 1, 2, 5, 6 oder 7, dadurch gekennzeichnet, daß die adhäsive Beschichtung (2) durch Aufspritzen auf die federnde Schicht (4, 5) hergestellt ist.

9. Formteil gemäß Anspruch 1, dadurch gekennzeichnet, daß die adhäsive Beschichtung (2) durch Aufschäumen auf die federnde Schicht (4, 5) hergestellt ist.

10. Formteil gemäß Anspruch 1, dadurch gekennzeichnet, daß die federnde Schicht (4, 5) eine ungleichmäßige Form und eine Vielzahl von Aussparungen und Ausstülpungen aufweist und daß die adhäsive Beschichtung (2) auf die federnde Schicht (4, 5) aufgespritzt oder aufgeschäumt ist.

**Revendications**

1. Pièce pré-formée constituant un système pré-formé d'isolation (3) pour l'isolation acoustique de cloisons (1) dans des véhicules à moteur, avec une couche de matériau élastique (4, 5) et une couche lourde (6), dans lequel ces couches (4, 5, 6) déterminent la forme et la taille du système d'isolation (3) et dans lequel est réalisée une forte liaison entre un substrat (1) et ces couches rapportées (4, 5, 6) par l'intermédiaire d'une surface adaptée à ces couches (4, 5, 6), caractérisée par un revêtement (2) constitué d'un polyol fortement réticulé, réparti uniformément à la surface de la couche élastique (4, 5) et disposé de manière permanente sur la face externe de celle-ci, en permettant au système d'isolation (3) d'adhérer au substrat (1) de manière adhésive et de pouvoir en être détaché sans être endommagé.

2. Pièce pré-formée selon la revendication 1, caractérisée en ce que le revêtement adhésif (2) contient en outre un mélange de bitume d'oxydation et de polypropylène atactique (APP).

3. Pièce pré-formée selon la revendication 2, caractérisée en ce que la proportion de mélange du polypropylène atactique (APP) avec le bitume est d'environ 1:3.

4. Pièce pré-formée selon les revendications 2 ou 3, caractérisée par une viscosité, à l'état fondu à 180°C, supérieure à 50 000 mPa·sec. et une valeur de pénétration selon la norme DIN 1995 entre 15 et 55, de préférence entre 35 et 55.

5. Pièce pré-formée selon une des revendications 1 à 4, caractérisée en ce les couches rapportées (4, 5, 6) liées par les forces d'adhésion présentent des propriétés d'amortissement acoustique.

6. Pièce pré-formée selon une des revendications 1 à 5, caractérisée en ce que le revêtement adhésif (2) est réalisé sur toute la surface.

7. Pièce pré-formée selon une des revendications 1 à 6, caractérisée en ce que le revêtement adhésif (2) est muni d'éléments recouvrants rigides en carton, en papier kraft, en matières plastiques pulvérisables durcissables ou analogues, et est disposé entre ces éléments recouvrants rigides et les couches rapportées (4, 5, 6).

8. Pièce pré-formée selon les revendications 1, 2, 5, 6 ou 7, caractérisée en ce que les revêtement adhésif (2) est réalisé par pulvérisation sur la couche élastique (4, 5).

9. Pièce pré-formée selon la revendication 1, caractérisée en ce que le revêtement adhésif (2) est réalisé par moussage sur la couche élastique (4, 5).

10. Pièce pré-formée selon la revendication 1, caractérisée en ce que la couche élastique (4, 5) présente

5

une forme irrégulière et une pluralité d'évidements et de protubérances, et en ce que le revêtement adhésif (2) est appliqué sur la couche élastique (4, 5) par pulvérisation ou par moussage.

**Claims**

1. A moulding which forms a shaped insulating system (3) for sound insulation of partition walls (1) in motor vehicles, comprising a layer of resilient material (4, 5) and a heavy layer (6), these layers (4, 5, 6) determining the shape and size of the insulating system (3), and wherein a force-locked connection is provided between a substrate (1) and these overlying layers (4, 5, 6) over a surface adapted to these layers (4, 5, 6), characterised by a coating (2) consisting of a highly under-cross-linked polyol on the surface of the resilient layer (4, 5) which is distributed uniformly over at least part of the surface of the resilient layer (4, 5) and is arranged permanently on the outside thereof, whereby the insulating system (3) adheres adhesively to the substrate (1) and can be removed therefrom without damage.

2. A moulding according to claim 1, characterised in that the adhesive coating (2) also includes a mixture of oxidation bitumen and atactic polypropylene (APP).

3. A moulding according to claim 2, characterised by a mixture having a ratio of atactic polypropylene (APP) to bitumen of about 1:3.

4. A moulding according to claim 2 or claim 3, characterised by a melt viscosity at 180°C >50,000 mPa·sec. and a penetration value according to DIN 1995 between 15 and 55, preferably between 35 and 55.

5. A moulding according to any one of claims 1 to 4, characterised in that the overlying layers (4, 5, 6) connected by the adhesive forces have acoustically damping properties.

6. A moulding according to any one of claims 1 to 5, characterised in that the adhesive coating (2) is applied over the entire surface.

7. A moulding according to any one of claims 1 to 6, characterised in that the adhesive coating (2) is provided with stiff coverings of cardboard, kraft paper, sprayable, hardenable plastics material or the like and is arranged between the stiff covering and the overlying layers (4, 5, 6).

8. A moulding according to any one of claims 1, 2, 5, 6 or 7, characterised in that the adhesive coating (2) is made by spraying on to the resilient layer (4, 5).

9. A moulding according to claim 1, characterised in that the adhesive coating (2) is made by foaming on the resilient layer (4, 5).

10. A moulding according to claim 1, characterised in that the resilient layer (4, 5) has an irregular shape and a plurality of recesses and protuberances and that the adhesive coating (2) is sprayed onto or foamed on the resilient layer (4, 5).

FIG.1

FIG.2